Europäisches Patentamt

European Patent Office

Office européen des brevets

(19)

(11) Veröffentlichungsnummer : **0 016 944**
**B1**

(12) **EUROPÄISCHE PATENTSCHRIFT**

(45) Veröffentlichungstag der Patentschrift :
15.12.82

(51) Int. Cl.³ : **G 01 K 13/02, G 01 D 13/24**

(21) Anmeldenummer : **80100790.7**

(22) Anmeldetag : **16.02.80**

(54) **Verfahren und Vorrichtung zur Überwachung eines Zentralheizungskessels anhand einer Messung der Rauchgastemperatur.**

(30) Priorität : **29.03.79 DE 2912376**

(43) Veröffentlichungstag der Anmeldung :
**15.10.80 (Patentblatt 80/21)**

(45) Bekanntmachung des Hinweises auf die Patenterteilung : **15.12.82 Patentblatt 82/50**

(84) Benannte Vertragsstaaten :
**AT DE FR GB IT SE**

(56) Entgegenhaltungen :
**CH A 405 501**
**DE A 2 004 515**
**FR A 783 517**
**GB A 1 358 746**
**US A 2 817 968**
**US A 3 811 404**

(73) Patentinhaber : **Wella Aktiengesellschaft**
**Berliner Allee 65**
**D-6100 Darmstadt (DE)**

(72) Erfinder : **Friedeborn, Günter**
**Bahnhofstrasse 8**
**D-6427 Bad Salzschlirf (DE)**

# Verfahren und Vorrichtung zur Überwachung eines Zentralheizungskessels anhand einer Messung der Rauchgastemperatur

Die Erfindung betrifft ein Verfahren und eine Vorrichtung zur Überwachung eines Zentralheizungskessels anhand einer Messung der Rauchgastemperatur.

Es sind bereits verschiedene Verfahren bekannt, die bei der Durchführung der turnusmäßig erforderlichen Wartung eines Zentralheizungskessels vom Fachmann eingesetzt werden und deren dafür verwendete Temperaturmeßgeräte nach erfolgter Wartung jeweils wieder ausgebaut werden. Die hierfür verwendeten Temperaturmeßgeräte haben den Nachteil, daß die Messung der momentanen Temperatur im Rauchfangrohr erst bei Betrieb des Brenners nach Abwarten einer gewissen Mindesteinschaltzeit von z.B. 10 Minuten sinnvoll ist, um vergleichbare Temperaturwerte zu erhalten. Hierbei wird der jeweils maximal erreichte Temperaturwert als Meßergebnis berücksichtigt. Dieses Meßergebnis ist noch abhängig vom Ort der Temperaturmessung im Rauchfangrohr. Das erzielte Ergebnis ist stark anlagenabhängig und somit nicht sehr aussagekräftig.

Bisher wurden bei jeder Inspektion eines Zentralheizungskessels durch den Fachmann, mit unterschiedlichen Meßgeräten verschiedenartige Messungen durchgeführt, und zwar unter anderem Messung des Rußgehaltes, des $CO_2$-Gehaltes und der Rauchgastemperatur, um den Wirkungsgrad des Heizungskessels inklusive Ölbrenner zu überprüfen.

Die Erfindung betrifft weiterhin eine Vorrichtung zum Durchführen des erfindungsgemäßen Verfahrens, die aus einem Temperaturfühler und einem damit verbundenen Temperaturanzeigegerät mit einem Zeiger zur Anzeige eines Temperaturwertes und mit einer eine Markierung tragenden, um dessen Achse wahlweise drehbaren Scheibe besteht.

Es sind bereits verschiedene derartige Temperaturanzeigegeräte bekannt, beispielsweise wie in der Patentschrift GB-A-13 58 746 beschrieben, das die die Markierung tragende, verdrehbare Scheibe zum Erkennen des dahinter liegenden Istwertzeigers durchsichtig ist und in ihrem radial außen liegendem Bereich eine Istwertskala zum Ablesen des Istwertes aufweist, wobei deren Vorderseite durch eine als Maske wirkende Frontplatte mit im wesentlichen ringförmiger Ausnehmung abgedeckt ist. Diese Ausnehmung weist an ihrer radial außen liegenden Begrenzung eine Skala für den Sollwert sowie eine fensterartige Aussparung auf, durch die nur der um einen Sollwert herum liegende Bereich der Istwertskala auf der verdrehbaren Scheibe von außen erkennbar ist, während die Markierung der verdrehbaren Scheibe auf den eingestellten Sollwert der Sollwertskala zeigt.

Solche Temperaturanzeigegeräte eignen sich nur dann zu Überwachungsaufgaben, wenn der Meßwert zum Zeitpunkt der Prüfung kontinuierlich angezeigt wird.

Die Erfindung hat sich zur Aufgabe gestellt, ein neuartiges Verfahren und eine neuartige Bauweise einer Vorrichtung zur Überwachung des Gesamtwirkungsgrades eines vorzugsweise ölbeheizten Zentralheizungskessels inklusive Brenner anzugeben, bei der über eine einfache Messung seiner Rauchgastemperatur eine laufende Überwachung des Gesamtwirkungsgrades des Zentralheizungskessels inklusive des Brenners in jedem beliebigen Betriebszustand sowohl dem Fachmann als auch dem Betreiber möglich ist.

Diese Aufgabe wird gemäß dem erfindungsgemäßen Verfahren dadurch gelöst, daß im Rauchfangrohr des Zentralheizungskessels ein Temperaturfühler fest angeordnet wird, dessen jeweilige maximale Temperatur durch den Schleppzeiger eines Temperaturanzeigegerätes angezeigt wird, daß die Einstellung einer um die Drehachse des Schleppzeigers wahlweise drehbaren, eine erste und zweite Marke tragenden Markierungsscheibe bei eingeschaltetem Brenner nach vorhergehender Heizkesselwartung derart erfolgt, daß diese nach Erreichen der größten Rauchgastemperatur solange verdreht wird, bis die erste Marke mit der augenblicklichen Stellung des Schleppzeigers übereinstimmt, daß anschließend die Markierungsscheibe gegen unbefugtes Verdrehen durch eine Arretierungsvorrichtung gesichert wird, daß danach der Schleppzeiger mittels einer Rückstellvorrichtung in einen Bereich zwischen kleinstem anzeigbarem Temperaturwert und der augenblicklichen Stellung des Istwertzeigers gedreht wird und daß im Zeitintervall zwischen der vorhergehenden Wartung und der nächstfolgenden Wartung die jeweilige Stellung des Schleppzeigers relativ zur zweiten Marke überprüft wird, die um eine vorgegebene Temperaturdifferenz hin zu höheren Temperaturen von der ersten Marke entfernt angeordnet ist.

Bei schlechter werdendem Wirkungsgrad des Heizkessels und somit bei Verstellung des Schleppzeigers in Richtung auf höhere Temperaturen kann ein Überschreiten der der zweiten Marke zugeordneten Höchsttemperatur erkannt werden.

In Anspruch 3 wird eine besonders vorteilhafte Ausführungsform eines Temperaturmeßgerätes zur Durchführung des erfindungsgemäßen Verfahrens angegeben.

Hierdurch ist es möglich, daß bei auch zur Zeit nicht eingeschaltetem Ölbrenner jederzeit die während der letzten Einschaltzeiten maximal erzielte Rauchgastemperatur im Rauchfangrohr des Zentralheizungskessels gemessen und permanent angezeigt bleibt, so daß vor allem der Betreiber der Heizungsanlage jederzeit in die Lage versetzt wird, selbst zu erkennen, wann eine unzulässig hohe Rauchgastemperatur erreicht und die nächste Wartung empfehlenswert ist.

Weitere Fortbildungen und Ausgestaltungen der Erfindung sind in den Unteransprüchen gekennzeichnet und werden nachstehend in Verbindung mit den zwei Ausführungsbeispiele darstellenden, teilweise schematisch vereinfachten Figuren beschrieben. In diesen sind einander entsprechende Teil mit gleichen Bezugszeichen versehen, und es sind alle zum Verständnis der Erfindung nicht notwendigen Einzelheiten fortgelassen worden.

Es zeigt :

Figur 1 eine Aufsicht auf das Temperaturanzeigegerät eines erfindungsgemäßen Temperaturmeßgerätes,

Figur 2 einen Schnitt entlang der Linie A-B durch die Ausführungsform von Fig. 1,

Figur 3 einen Schnitt durch den mit dem Temperaturanzeigegerät von Fig. 1 zusammenwirkenden in einem nur teilweise dargestellten Rauchfangrohr eingebauten Temperaturfühler,

Figur 4 einen Schnitt entlang der Linie C-D durch ein Detail — eine Arretierungsvorrichtung — der in Fig. 1 gezeigten Ausführungsform,

Figur 5 eine Aufsicht auf eine zweite Ausführungsform des Temperaturanzeigegerätes des erfindungsgemäßen Temperaturmeßgerätes und

Figur 6 einen Schnitt entlang der Linie A-B durch die Ausführungsform von Fig. 5.

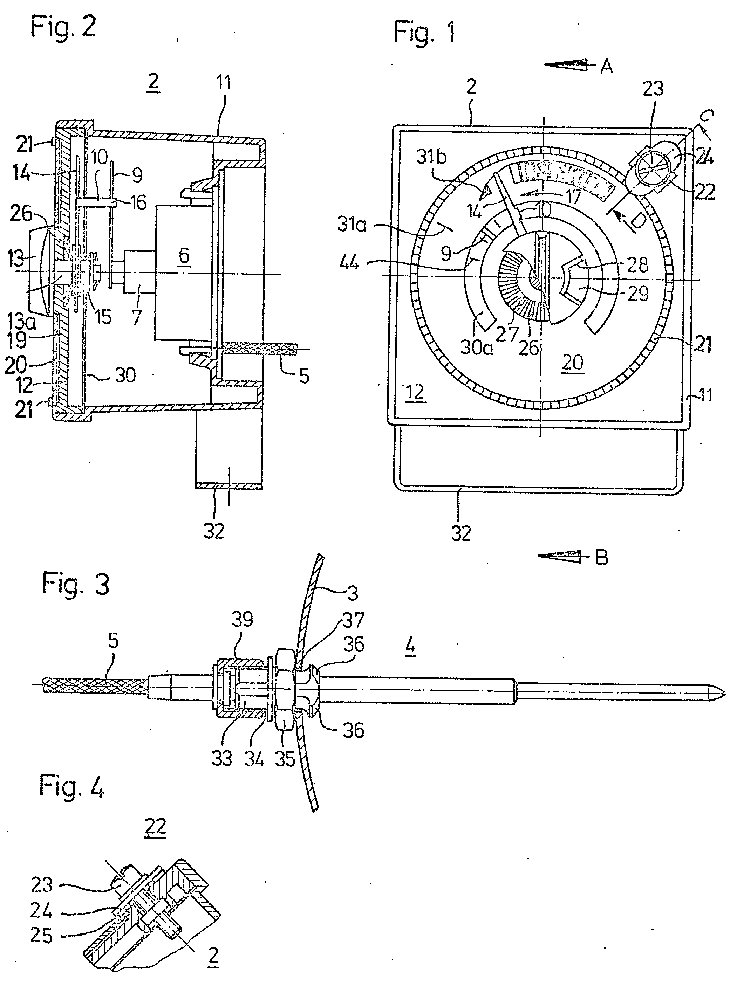

Die Figuren 1 bis 4 zeigen ein Temperaturmeßgerät zur Messung der Rauchgastemperatur eines Zentralheizungskessels, das aus einem Temperaturanzeigegerät 2, einem in einem nur teilweise dargestellten Rauchfangrohr 3 montiert gezeigten Temperaturführer 4 und einem den Temperaturfühler 4 und das Temperaturanzeigegerät 2 verbindendes, flüssigkeitsgefülltes Kapilarrohr 5 besteht.

Wie in Fig. 2 gezeigt, führt dieses flüssigkeitsgefüllte Kapilarrohr 5 zu einem Ausdehnungsgefäß 6 bekannter Bauart, das einen um die Drehachse 7 drehbar angeordneten Istwertzeiger 9 trägt, dessen Drehwinkel im wesentlichen proportional zum mit dem Temperaturfühler gemessenen Temperaturwert ist. Das Ausdehnungsgefäß 6 sowie der Istwertzeiger 9 sind Teil des Temperaturmeßwertes, das in einem quaderförmigen Gehäuse 11 untergebracht ist, dessen dem Ausdehnungsgefäß 6 gegenüberliegende Seite von einem, vorzugsweise aus durchsichtigem Kunststoff bestehenden Deckglas 12 verschlossen ist. In der Mitte dieses Deckglases 12 ist ein um die Achse 7 drehbarer Drehknopf 13 angeordnet, auf dessem Achskörper 13a ein hierzu beliebig verdrehbarer Schleppzeiger 14 sitzt, der über eine aus zwei Scheiben bestehenden Friktionskupplung 15 mit dem Achskörper 13a verbunden ist.

Der Schleppzeiger 14 trägt in seinem äußeren Bereich einen axial nachinnen in Richtung auf das Ausdehnungsgefäß 6 sich erstreckenden Vorsprung 10, der soweit vorragt, daß dessen freies Ende 16 sich bis zum Istwertzeiger 9 hin erstreckt und von diesem bei Drehung in Richtung des Pfeiles 17 mitgenommen wird, wie Fig. 1 in Verbindung mit Fig. 2 zeigt. Konzentrisch zur Drehachse 7 ist auf dem Deckglas 12 in einer rotationssymmetrischen Ausnehmung 19 eine Markierungsscheibe 20 drehbar angeordnet, die auf ihrer Außenseite im radialen Randbereich auf den ganzen Umfang gleichmäßig verteilte Rastnocken 21 aufweist, die das eine Teil einer Arretierungsvorrichtung 22 bildet und daß das entsprechende Gegenglied der Arretierungsvorrichtung 22 als eine wahlweise mit einer Schraube 23 lösbare Lasche 24 ausgebildet ist, die eine zwischen zwei benachbarte Rastnocken 21 eingreifende Rastnase 25 trägt, wie aus Fig. 4 besser ersichtlich.

Wie aus Fig. 2 besser erkennbar, trägt der mittlere Bereich 26 des Deckglases 12 auf einem konzentrischen Kreis angeordnete, axial nach außen vorspringende sägezahnförmige Vorsprünge 27, die mit dem jeweiligen freien Ende 28 von zwei federnden, auf dem Drehknopf 13 diametral gegenüberliegend angeordneten Rastlippen 29 entsprechend im Eingriff stehen. Diese Anordnung ist derart getroffen, daß nur eine Drehung des Drehknopfes 13 und somit der Markierungsscheibe 20 in Richtung des Pfeiles 17 zulässig ist, jedoch eine Drehung entgegen der Richtung des Pfeiles 17 verhindert wird. Zwischen Istwertzeiger 9 und Schleppzeiger 14 ist eine Sichtblende 30 angeordnet, die von außen den Istwertzeiger im wesentlichen verdeckt, wodurch die augenblickliche Stellung des Schleppzeigers 14 hervorgehoben wird.

Die Sichtblende 30 weist einen konzentrisch angeordneten Schlitz 30 auf, durch den der Vorsprung 10 des Schleppzeigers 14 nach innen ragt. Durch diesen Schlitz 30a ist die augenblickliche Stellung des Istwertzeigers 9 erkennbar (Fig. 1), wodurch im Gebrauch jederzeit die einwandfreie Funktion des Ausdehnungsgefäßes 6 uberprüft werden kann. Zur Eichung nach erfolgter Montage des Ausdehnungsgefäßes 6 im Temperaturanzeigegerät 2 kann durch Drehung des das Meßwerk enthaltenden Ausdehnungsgefäßes 6 der Istwertzeiger 9 mit vorgegebenen Eichmarken 44 auf der Markierungsscheibe 20 in Deckung gebracht werden.

Auf der Außenseite der Markierungsscheibe 20 sind ein die erste Marke bildender Markierungsstrich 31a und gemäß Fig. 1 rechts davon in einem tangentialen Abstand, der einer Temperaturdifferenz von etwa 40 bis 50° Celsius entspricht, eine die zweite Marke bildende dreieckförmige Markierung 31b sowie noch weiter rechts davon die Inschrift « Inspektion » angeordnet.

Das Gehäuse 11 des Temperaturanzeigegerätes 2 trägt einen wahlweise an seiner Außenseite an verschiedenen Stellen zu befestigen Befestigungsbügel 32, mit dem das Temperaturanzeigererät an jeder beliebigen Wandfläche befestigt werden kann. Der zugehörige, in Fig. 3 gezeigte Temperaturfühler 4 weist an seinem mit dem Kapilarrohr 5 verbundenen Ende eine darauf verschiebbare geschlitzte Muffe 33 mit einem Außengewinde 34 auf, auf das eine Mutter 35 aufgeschraubt ist. Das vom Kapilarrohr 5 abgewandte Ende der Muffe 33 weist zwei diametral gegenüberliegende Vorsprünge 36 auf, deren größter Außendurchmesser um wenigstens 10 % größer ist als der größte Innendurchmesser des Befestigungloches 37 im Rauchfangrohr 3. Die Mutter 35 ist durch eine auf der Muffe 33 angeordnete Idealscheibe gegen versehentlich zu weites Abschrauben gesichert. Zusätzlich ist auf der Muffe eine Rändelmutter 39 aufgeschraubt, durch die mittels Erhöhung des Anpreßdruckes eine feste Verbindung zwischen der achsial verschiebbaren Muffe 33 und dem Temperaturfühler 4 zur achsialen Festlegung seiner Stellung im Rauchfangrohr 3 erzielt wird.

Bei der Montage des Temperaturfühlers 4 im Rauchfangrohr 3 wird so vorgegangen, daß der Temperaturfühler 4 mit seiner Muffe verkantet in das Befestigungsloch 37 eingeführt wird, so daß die beiden Vorsprünge 36 nacheinander hinter die Innenwand des Rauchfangrohres 3 greifen. Anschließend wird die Muffe 33 mit der Mutter 35 im Rauchfangrohr befestigt, wobei in Fig. 3 eine noch nicht fest angezogene Zwischenstellung der Muffe 33 gezeigt wird. Nun kann durch achsiale Verschiebung des Temperaturfühlers die größte Temperatur im Rauchfangrohr ermittelt werden, wobei die hierzu erforderliche achsiale Stellung im Rauchfangrohr 3 durch Anziehen einer entsprechend ausgebildeten Rändelmutter 39 durch radiales Zusammenpressen der geschlitzten Muffe 33 anschließend fixiert wird.

Die Wirkungsweise des Temperaturanzeigegerätes 2 ist folgendermaßen :

Jedesmal, wenn der Ölbrenner in einem Zentralheizungskessel anspringt, bewegt sich der Istwertzeiger 9 entgegengesetzt zur Richtung des Pfeiles 17 und nimmt hierbei den Schleppzeiger 14 über dessen Vorsprung 10 bis zu seiner jeweiligen maximalen Stellung mit. Von außen ist im wesentlichen nur die jeweilige Stellung des Schleppzeigers 14 erkennbar, die ein Maß für die beim letzten Betrieb des Ölbrenners erreichte maximale Rauchgastemperatur im Rauchfangrohr 3 ist.

Die Eichung des Temperaturanzeigegerätes 2 erfolgt jedesmal nach der Wartung des Zentralheizungskessels, nachdem die jeweils optimalen Brennerbedingungen — minimale Rauchgastemperatur bei richtig eingestelltem $CO_2$- und Rußgehaltnach entsprechender Kesselreinigung und erneuter Brennereinstellung vorhanden sind. Als minimale Temperatur kann sich hierbei je nach Kesselanlage eein Wert zwischen 180° bis ca. 300° Celsius ergeben. Eine Erhöhung dieses Wertes um bereits 50° Celsius entspricht bereits einer Wirkungsgradverschlechterung von etwa 2 %, was sich in erhöhten Heizkosten bereits bemerkbar macht.

Nun wird der Schleppzeiger 14 mit Hilfe des Drehknopfes 13 in seine in Bezug auf Fig. 1 linke Endlage durch Drehen in Richtung des Pfeiles 17 gebracht. Nach dem nächsten Einschaltzyklus des Brenners wird der Schleppzeiger 14 durch den Istwertzeiger 9 in die der jeweiligen maximal erreichten Rauchgastemperatur zugehörigen Stellung mitgenommen und dort auch nach Abschalten des Brenners stehengelassen, während der Istwertzeiger 9 wieder zum linken Endanschlag langsam zurückgeht. Nun wird die Arretierungsvorrichtung 22 gelöst, die Markierungsscheibe 20 so weit verdreht, daß der in Fig. 1 links gezeigte Markierungsstrich 31a mit dem Schleppzeiger 14 fluchtet. Danach wird die Arretierungsvorrichtung 22 wieder befestigt, so daß eine ungewollte oder unbefugte Verdrehung der Markierungsscheibe 20 verhindert ist.

Nun kann der Benutzer der Zentralheizungsanlage im laufe des Betriebes jeweils selbst überprüfen, ob die Rauchgastemperatur unzulässig hoch und damit der Wirkungsgrad seiner Heizungskessel zu unwirtschaftlich ist, so daß er bei Erreichen des Inspektionsfeldes durch den Schleppzeiger die nächste Wartung seines Heizungskessels veranlassen kann.

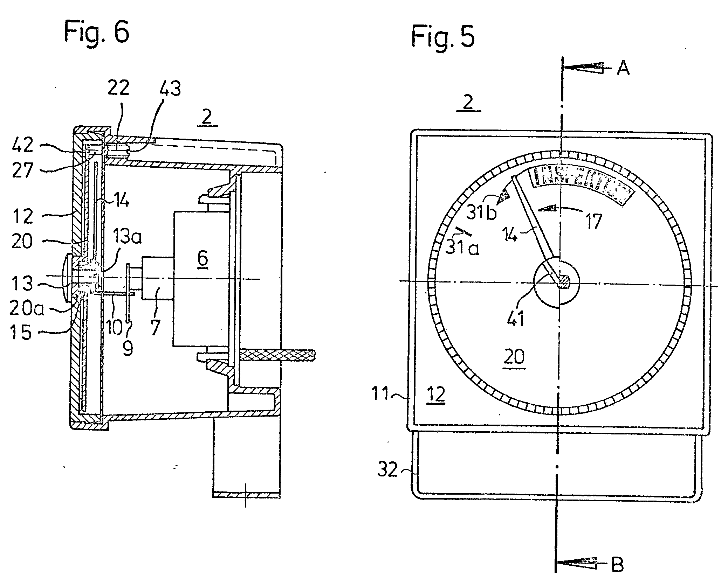

Die in Fig. 5 und 6 gezeigte zweite Ausführungsform des erfindungsgemäßen Temperaturmeßgerätes unterscheidet sich von der in Fig. 1 bis 4 gezeigten Ausführungsform durch einige konstruktive Änderungen, wobei die Funktion im wesentlichen identisch ist. Wie in Fig. 6 gezeigt, ist hier abweichend die Markierungsscheibe 20 unter dem Deckglas 12 angeordnet. Dieses Deckglas weist in seinem mittleren Bereich eine achsiale Öffnung auf, in der die Markierungsscheibe 20 mit ihrem hohlzylindrischen Fortsatz 20a drehbar gelagert ist, der in seinem Inneren den hierin drehbar gelagerten Achskörper 13a mit Drehknopf 13 trägt.

Der Drehknopf 13 weist außen einen Querschlitz 41 aufwie in Fig. 5 besser gezeigt, in den zum Verdrehen ein Schraubenzieher eingesetzt werden kann. Der Achskörper 13a des Drehknopfes 13 ist über die Friktionskupplung 15 mit dem Schleppzeiger 14 verbunden, dessen über die Achse hinausragendes kurzes Ende den Vorsprung 10 zur Mitnahme durch den Istwertzeiger 9 trägt.

Abweichend sind hier die sägezahnförmigen Vorsprünge 27 nicht im mittleren Bereich sondern im Randbereich der Markierungsscheibe 20 auf der dem Deckglas 12 zugewendeten Seite auf einem konzentrischen Kreis angeordnet. Ein entsprechend hiermit zusammenwirkender Zahn 42 ist auf der gegenüberliegenden Innenseite des Deckglases 12 angeordnet. Die Anordnung ist derart getroffen, daß eine Drehung der Markierungsscheibe 20 mittels Drehknopf 13 in Richtung des Pfeiles 17 möglich ist, während eine Drehung in entgegengesetzter Richtung verhindert wird. Die Markierungsscheibe 20 ist so weit elastisch ausgebildet, daß bei deren Drehung in Richtung des Pfeiles 17 deren Ende jeweils um die Höhe des Zahnes 42 in achsialer Richtung elastisch federnd nachgeben kann. Weiterhin ist im Randbereich des Gehäuses auf der dem Zahn 42 gegenüberliegenden Seite die Arretierungsvorrichtung 22 angeordnet, die als Schraube 43 in einem Gewindeloch ausgebildet ist.

Nach erfolgter Eichung wird nun die Schraube 43 so weit angezogen, bis das achsiale Spiel des Randes der Markierungsscheibe 20 kleiner, vorzugsweise halb so groß, als die Höhe des Zahnes 42 ist. Nach erfolgter Arretierung kann somit die Markierungsscheibe 20 mittels Drehknopf 13 nicht mehr unbefugt verstellt werden. Die restliche Funktion entspricht der in den Fig. 1 bis 4 dargestellten Ausführungsform, wobei der konzentrisch angeordnete Schlitz 30a an der Sichtblende 30 bei dieser Ausführungsform von außen durch den Drehknopf 13 verdeckt ist.

Bei einer weiteren nicht dargestellten Ausführungsform ist der Temperaturfühler 4 als Bi-Metall-Temperaturgeber ausgebildet.

Für besondere Anwendungsfälle ist es günstig, wenn ein Schaltkontakt vorgesehen ist, der derart angeornet ist, daß der Schleppzeiger 14 bei Erreichen der Stellung, die der zweiten Marke 31b entspricht, ein elektrisches Signal erzeugt, das vorzugsweise eine optische Anzeige hat.

**Ansprüche**

1. Verfahren zur Überwachung eines Zentralheizungskessels anhand einer Messung des Rauchgastemperatur, dadurch gekennzeichnet, daß im Rauchfangrohr (3) des Zentralheizungskessels ein Temperaturfühler (4) fest angeordnet wird, dessen jeweilige maximale Temperatur durch den Schleppzeiger (14) eines Temparturanzeigegerätes (2) angezeigt wird, daß die Einstellung einer um die Drehachse (7) des Schleppzeigers (14) wahlweise drehbaren, eine erste und zweite Marke (31a, 31b) tragenden Markierungsscheibe (20) bei eingeschaltetem Brenner nach vorhergehender Heizkesselwartung derart erfolgt, daß diese nach Erreichen der größten Rauchgastemperatur solange verdreht wird, bis die erste Marke (31a) mit der augenblicklichen Stellung des Schleppzeigers (14) übereinstimmt, daß anschließend die Markierungsscheibe (20) gegen unbefugtes Verdrehen durch eine Arretierungsvorrichtung (22) gesichert wird, daß danach der Schleppzeiger (14) mittels einer Rückstellvorrichtung (13) in einen Bereich zwischen kleinstem anzeigbarem Temperaturwert und der augenblicklichen Stellung des Istwertzeigers gedreht wird und daß im Zeitintervall zwischen der vorhergehenden Wartung und der nächstfolgenden Wartung die jeweilige Stellung des Schleppzeigers (14) relativ zur zweiten Marke (31b) überprüft wird, die um eine vorgegebene Temperaturdifferenz hin zu höheren Temperaturen von der ersten Marke (31a) entfernt angeordnet ist.

2. Verfahren zur Messung der Rauchgastemperatur nach Anspruch 1, dadurch gekennzeichnet, daß die vorgegebene Temperaturdifferenz wenigstens 30° Celsius, vorzugsweise 50° bis 60° Celsius, beträgt.

3. Temperaturmeßgerät zur Durchführung des Verfahrens nach Anspruch 1 oder 2, bestehend aus einem Temperaturfühler (4) und einem damit verbundenen Temperaturanzeigerät (2) mit einem Istwertzeiger zur Anzeige eines Temperaturwertes und mit einer eine Sollwert-markierung tragenden, um die Achse des Istwertzeigers wahlweise verdrehbaren Markierungsscheibe, dadurch gekennzeichnet, daß auf der Drehachse (7) des Istwertzeigers (9) ein mit diesem gekoppelter Schleppzeiger (14) angeordnet ist, daß die größte radiale Abmessung der Markierungsscheibe (20) größer ist als die radiale Länge des Schleppzeigers (14) und daß die Markierungsscheibe (20) in einem Bereich nahe ihrem Umfang eine erste und eine zweite Markierung (31a und 31b) aufweist, die zueinander einen Zentriwinkel besitzen, der wenigstens einer Temperaturdifferenz von 30° Celsius, vorzugsweise von 50° Celsius, entspricht (Fig. 1, 5 und 6).

4. Temperaturmeßgerät nach Anspruch 3, dadurch gekennzeichnet, daß die Markierungsscheibe (20) auf der vom Istwertzeiger (9) abgewendeten Seite des Deckglases (12) angeordnet ist (Fig. 2).

5. Temperaturmeßgerät nach Anspruch 3, dadurch gekennzeichnet, daß die Markierungsscheibe (20) auf der dem Istwertzeiger (9) zugewendeten Seite des Deckglases (12) angeordnet ist (Fig. 6).

6. Temperaturmeßgerät nach Anspruch 3 und 4, dadurch gekennzeichnet, daß die dem Drehknopf (13) zugewendete Seite des Deckglases (12) in ihrem mittleren Bereich (26) nach außen vorspringende sägezahnförmige Vorsprünge (27) trägt, die vorzugsweise auf einem konzentrischen Kreis gleichmäßig verteilt sind und das eine Teil der Rückstellvorrichtung bilden, daß die flachere und die steilere Zahnflanke jedes sägezahnförmigen Vorsprunges derart angeordnet ist, daß die dem Deckglas (12) zugewendete Seite des Drehknopfes (13) in axialer Richtung wenigstens eine, vorzugsweise zwei federnde, das andere Teil der Rückstellvorrichtung bildende Rastlippen (29) aufweist, die mit den sägezahnförmigen Vorsprüngen (27) in Eingriff stehen (Fig. 1 und 2).

7. Temperaturmeßgerät nach Anspruch 3 und 5, dadurch gekennzeichnet, daß die dem Deckglas (12) zugewendete Seite der Markierungsscheibe (20) in ihrem radial außenliegenden Bereich axial nach außen vorspringende sägezahnförmige Vorsprünge (27) trägt, die vorzugsweise auf einem konzentrischen Kreis gleichmäßig verteilt sind und das eine Teil der Rückstellvorrichtung bilden, und daß die flachere und die steilere Zahnflanke jedes sägezahnförmigen Vorsprunges (27) derart angeordnet ist, daß die der Markierungsscheibe (20) gegenüberliegende Seite des Deckglases (12) in axialer Richtung wenigstens einen Zahn (42) aufweist, der mit den sägezahnförmigen Vorsprüngen (27) in Eingriff steht (Fig. 6).

8. Temperaturmeßgerät nach Anspruch 3, dadurch gekennzeichnet, daß die Markierungsscheibe (20) mit einer wahlweise lösbaren Arretierungsvorrichtung (22) versehen ist (Fig. 1 und 6).

9. Temperaturmeßgerät nach Anspruch 3, 6 und 8, dadurch gekennzeichnet, daß die Markierungsscheibe (20) in ihrem äußeren Bereich vorzugsweise am ganzen Umfang gleichmäßig verteilte Rastnocken (21) aufweist, die auf der vom Deckglas (12) abgewendeten Seite der Markierungsscheibe (20) angeordnet sind und das eine Teil der Arretierungsvorrichtung (22) bilden, und daß als entsprechendes Gegenglied der arretierungsvorrichtung (22) auf dem Gehäuse (11) bzw. dem Deckglas (12) eine entsprechende wahlweise mit einer Schraube (23) lösbare Lasche (24) vorgesehen ist, die eine zwischen zwei benachbarten Rastnocken (21) eingreifende Rastnase (25) aufweist (Fig. 1 und 4).

10. Temperaturmeßgerät nach Anspruch 3, 7 und 8, dadurch gekennzeichnet, daß im Gehäuse (11) eine Gewindebohrung vorgesehen ist, in die eine die Arretierungsvorrichtung (22) bildende, von der Gehäuserückseite zugängliche Schraube (43) eingeschraubt ist, die auf den äußeren Bereich der vom Deckglas (12) abgewendeten Seite der Markierungsscheibe (20) drückt (Fig. 6).

11. Temperaturmeßgerät nach Anspruch 3, dadurch gekennzeichnet, daß der Temperaturfühler (4) als Bi-Metall-Temperaturgeber ausgebildet ist.

12. Temperaturmeßgerät nach Anspruch 3, dadurch gekennzeichnet, daß der Temperaturfühler (4) ein länglich zylindrisches Fühlergehäuse aufweist, das mit Ausdehnungsflüssigkeit gefüllt ist und über ein Kapilarrohr (5) mit dem Ausdehnungsgefäß (6) des Temperaturmeßwerkes im Temperaturanzeigegerät (2) verbunden ist (Fig. 2 und 3).

13. Temperaturmeßgerät nach Anspruch 3 und 12, dadurch gekennzeichnet, daß das Fühlergehäuse im Bereich des Kapilarrohranschlusses, mit einer darauf axial verschiebbaren geschlitzten Muffe (33) mit Außengewinde (34) und darauf unverlierbar befestigten Mutter (35) versehen ist, der auf seiner vom Kapilarrohr (5) abgewendeten Seite zwei radial nach außen, diametral zueinander angeordnete Vorsprünge (36) aufweist, deren größter Außendurchmesser um wenigstens 10 % größer ist als der größte Innendurchmesser des zugehörigen Befestigungsloches (37) im Rauchfangrohr (3).

14. Temperaturmeßgerät nach Anspruch 3, dadurch gekennzeichnet, daß die zweite Markierung (31b) eine von der ersten abweichende Form besitzt (Fig. 1 und 5).

15. Temperaturmeßgerät nach Anspruch 3, dadurch gekennzeichnet, daß ein Schaltkontakt vorgesehen ist, der derart angeordnet ist, daß der Schleppzeiger (14) bei Erreichen der Stellung, die der zweiten Marke (31b) entspricht, ein elektrisches Signal erzeugt, das vorzugsweise eine optische Anzeige hat.

16. Temperaturmeßgerät nach Anspruch 3, dadurch gekennzeichnet, daß der Istwertzeiger (9) durch eine Blende (30) fast völlig verdeckt ist und daß vorzugsweise Eichmarken (44) auf dieser Blende angeordnet sind (Fig. 1).

17. Temperaturmeßgerät nach Anspruch 3, dadurch gekennzeichnet, daß der Schleppzeiger (14) eine in Richtung auf den Istwertzeiger (9) und über diesen hinausragenden als Vorsprung (10) ausgebildeten Mitnahmewinkel trägt und daß auf der vom Istwertzeiger (9) abgewandten Seite des Deckglases (12) ein Drehknopf (13) axial angeordnet ist, der über eine Friktionskupplung (15) mit dem Schleppzeiger (14) verbunden ist (Fig. 2 und 6).

**Claims**

1. A method of monitoring a central heating boiler involving measurement of the smoke gas temperature, characterized in that in the chimney pipe (3) of the central heating boiler a temperature sensor (4) is rigidly arranged, of which the maximum temperature in each case is indicated by the drag indicator (14) of a temperature indicator device (2) ; in that the adjustment of a disc marker (20), which is optionally rotatable about the axis of rotation (7) of the drag indicator (14) and bears a first and second mark (31a, 31b), occurs when the burner is switched on after previous boiler maintenance such that when the greatest smoke gas temperature has been reached the disc marker (20) is rotated until the first mark (31a) corresponds to the instantaneous position of the drag indicator (14) ; in that subsequently the disc marker (20) is secured against unauthorized rotation by a locking device (22) ; in that subsequently the drag indicator (14) is rotated by means of a resetting device (13) in a region between the smallest temperature value which can be indicated and the instantaneous position of the actual value indicator ; and in that in the time interval between the previous maintenance and the subsequent maintenance the current position of the drag indicator (14) relative to the second mark (31b) is examined, which is arranged distant from the first mark (31a) by a predetermined temperature difference with respect to higher temperatures.

2. A method of measuring the smoke gas temperature according to claim 1, characterized in that the predetermined temperature difference is at least 30° Celsius, preferably 50° to 60° Celsius.

3. A temperature measuring device for carrying out the method according to claim 1 or 2, consisting of a temperature sensor (4) and a temperature indicator device (2) connected thereto with an actual value indicator to indicate a temperature value and with a disc marker which bears a set value marking and is optionally rotatably about the axis of the actual value indicator, characterized in that on the axis of rotation (7) of the actual value indicator (9) a drag indicator (14), coupled thereto is arranged ; in that the greatest radial dimension of the disc marker (20) is greater than the radial length of the drag indicator (14), and in that the disc marker (20) in a region near its periphery comprises a first and a second marker (31a and 31b) which have a centering angle with respect to one another which corresponds at least to a temperature difference of 30° ·Celsius, preferably 50° Celsius (Fig. 1, 5, and 6).

4. A temperature measuring device according to claim 3, characterized in that the disc marker (20) is arranged on the side of a cover glass (12) facing away from the actual value indicator (9) (Fig. 2).

5. A temperature measuring device according to claim 3, characterized in that the disc marker (20) is arranged on the side of a cover glass (12) facing the actual value indicator (9) (Fig. 6).

6. A temperature measuring device according to claim 3 and 4, characterized in that the side of the cover glass (12) facing the rotary head (13) bears in its central region (26) saw-shaped projections (27) projecting outwardly which are preferably uniforn.ly distributed on a concentric circle and form one part of the resetting device ; in that the flatter and steeper tooth flank of each saw-tooth-shaped projection (13) facing the cover glass (12) comprises in the axial direction at least one, preferably two, resilient catching lips (29) forming the other part of the resetting device which engage with the saw-tooth-shaped projections (27) (Fig. 1 and 2).

7. A temperature measuring device according to claim 3 and 5, characterised in that the side of the disc marker (20) facing the cover glass (12) bears outwardly projecting saw-tooth-shaped projections (27) in its radially outwardly lying region, which are preferably uniformly distributed on a concentric circle and form one part of the resetting device, and in that the flatter and steeper tooth flank of each saw-tooth-shaped projection (27) is arranged such that the side of the cover glass (12) lying opposite the disc marker (20) comprises at least one tooth (42) in the axial direction which engages with the saw-tooth-shaped projections (27) (Fig. 6).

8. A temperature measuring device according to claim 3, characterized in that the disc marker (20) is provided with an optionally detachable locking device (22) (Fig. 1 and 6).

9. A temperature measuring device according to claim 3, 6 and 8, characterized in that the disc marker (20) comprises catching cams (21) in its outer region which are preferably uniformly distributed on the whole periphery and arranged on the side of the disc marker (20) facing away from the cover glass (12) and form one part of the locking device (22) ; and in that as a corresponding counter member of the locking device (22) on the housing (11) or the cover glass (12) a corresponding cover plate (24), which is optionally detachable with a screw (23), is provided which comprises a catching nose (25) engaging between two adjacent catching cams (21) (Fig. 1 and 4).

10. A temperature measuring device according to claim 3, 7, and 8, characterized in that in the housing (11) a tapped bore is provided in which a screw (43) forming the locking device (22) and accessible from the rear of the housing is screwed in and pushes on the outer region of the side of the disc marker (20) facing away from the cover glass (12) (Fig. 6).

11. A temperature measuring device according to claim 3, characterized in that the thermometer sensor (4) is constructed as a bimetallic temperature transmitter.

12. A temperature measuring device according to claim 3, characterized in that the temperature sensor (4) comprises an elongate cylindrical sensor housing which is filled with expansion fluid and is connected by way of a capillary tube (5) to the expansion tank (6) of the temperature measuring device in the temperature indicating device (2) (Fig. 2 and 3).

13. A temperature measuring device according to claim 3 and 12, characterized in that the sensor housing in the region of the capillary tube connection is provided with a slotted sleeve (33) which is axially displaceable thereon with an outer thread (34) and a captive nut (35) secured thereto which on its side facing away from the capillary tube (5) comprises two projections (36) arranged radially outwards and diametrically with respect to one another, of which the greatest outer diameter is greater by at least 10 % than the greatest inner diameter of the associated fastening hole (37) in the chimney pipe (3).

14. A temperature measuring device according to claim 3, characterized in that the second marking (31b) has a form deviating from the first one (Fig. 1 and 5).

15. A temperature measuring device according to claim 3, characterized in that a switch contact is provided which is arranged such that on reaching a position which corresponds to the second mark (31b) the drag indicator (14) produces an electrical signal which preferably has an optical indicator.

16. A temperature measuring device according to claim 3, characterized in that the actual value indicator (9) is almost completely covered by a shutter (30) and in that calibration marks (44) are preferably arranged on this shutter (Fig. 1).

17. A temperature measuring device according to claim 3, characterized in that the drag indicator (14) bears an angular engaging member in the direction of the actual value indicator (9) and projecting beyond the latter as a projection (10) ; and in that on the side of the cover glass (12) facing away from the actual value indicator (9) a rotary head (13) is arranged axially which is connected by way of a friction coupling (15) to the drag indicator (14) (Fig. 2 and 6).

## Revendications

1. Procédé de surveillance d'une chaudière de chauffage central au moyen de la mesure de la température des gaz brûlés, caractérisé en ce qu'un détecteur de température (4) est monté de façon fixe dans la conduite (3) de la cheminée de la chaudière de chauffage central, dont la température maximale est affichée par l'aiguille entraînée (14) d'un dispositif d'affichage (2) de la température, en ce qu'on règle un disque à repères (20) pouvant être tourné à volonté autour de l'axe de rotation (7) de l'aiguille entraînée (14) et portant un premier et un second repères (31a, 31b), le brûleur étant en fonctionnement et après un entretien préalable de la chaudière de chauffage, en faisant tourner ce disque,. lorsque la température maximale des gaz brûlés est atteinte, jusqu'à ce que le premier repère (31a) concorde avec la position momentanée de l'aiguille entraînée (14), en ce qu'ensuite le disque à repères (20) est bloqué par un dispositif d'arrêt (22) pour lui éviter toute rotation non autorisée, en ce qu'ensuite l'aiguille entraînée (14) est tournée au moyen d'un dispositif de rappel (13) dans une zone située entre la valeur de la température affichable la plus faible et la position momentanée de l'aiguille indiquant la valeur réelle, en ce que dans l'intervalle de temps séparant l'entretien précédant et l'entretien suivant, la position de l'aiguille entraînée (14) par rapport au second repère (31b) est contrôlée, ce repère étant éloigné du premier repère (31a) d'une différence de température prédéterminée en direction de températures plus élevées.

2. Procédé de mesure de la température de gaz brûlés selon la revendication 1, caractérisé en ce que la différence de température prédéterminée est d'au moins 30° Celsius, et de préférence comprise entre 50° et 60° Celsius.

3. Appareil de mesure de température destiné à la mise en œuvre du procédé selon la revendication 1 ou 2, constitué par un détecteur de température (4) et par un dispositif d'affichage de température (2) relié à ce dernier, comprenant une aiguille indiquant la valeur réelle pour indiquer une valeur de température, et un disque à repères portant un repère de valeur de consigne et que l'on peut faire tourner à volonté autour de l'axe de l'aiguille indiquant la valeur réelle, caractérisé en ce que sur l'axe de rotation (17) de l'aiguille indiquant la valeur réelle (9) est montée une aiguille entraînée (14) accouplée à la première, en ce que la dimension radiale la plus importante du disque à repères (20) est plus importante que la longueur radiale de l'aiguille entraînée (14) et en ce que le disque à repères (20) comprend, dans une zone proche de sa périphérie, un premier et un second repères (31a et 31b), formant entre eux un angle au centre correspondant au moins à une différence de température de 30° Celsius et de préférence de 50° Celsius (Fig. 1, 5 et 6).

4. Appareil de mesure de température selon la revendication 3, caractérisé en ce que le disque à repères (20) est monté sur le côté d'un verre de recouvrement (12) qui est à l'opposé de l'aiguille indiquant la valeur réelle (9) (Fig. 2).

5. Appareil de mesure de température selon la revendication 3, caractérisé en ce que le disque à repères (20) est monté sur le côté d'un verre de recouvrement (12) qui est tourné vers l'aiguille indiquant la valeur réelle (9) (Fig. 6).

6. Appareil de mesure de température selon les revendications 3 et 4, caractérisé en ce que le côté du verre de recouvrement (12) qui est tourné vers le bouton tournant (13) comprend dans sa zone centrale (26) des saillies en dents de scie (27) faisant saillie vers l'extérieur, qui sont de préférence réparties régulièrement sur un cercle concentrique et qui forment une partie du dispositif de rappel, en ce que le flanc le plus plat et le plus incliné de chaque saillie en dent de scie est disposé de manière que le côté du bouton tournant (13) qui est tourné vers le verre de recouvrement (12) comprenne en direction axiale au moins une, et de préférence deux, lèvres d'arrêt (29) élastiques formant l'autre partie du dispositif d'arrêt de rotation, ces lèvres étant en prise avec les saillies en dents de scie (27) (Fig. 1 et 2).

7. Appareil de mesure de température selon les revendications 3 et 5, caractérisé en ce que le côté du disque à repères (20) qui est tourné vers le verre de recouvrement (12) porte dans sa zone radiale et située vers l'extérieur des saillies en dents de scie axiales (27) faisant saillie vers l'extérieur, qui sont de préférence réparties régulièrement sur un cercle concentrique et qui forment une partie du dispositif d'arrêt de rotation, et en ce que le flanc le plus plat et le plus incliné des dents de chaque saillie en dent de scie (27) est disposé de manière que le côté du verre de recouvrement (12) qui est face au disque à repères (20) comprenne en direction axiale au moins une dent (42) qui est en prise avec les saillies en dents de scie (27) (Fig. 6).

8. Appareil de mesure de température selon la revendication 3, caractérisé en ce que le disque à repères (20) est muni d'un dispositif d'arrêt (22) pouvant être dégagé à volonté (Fig. 1 et 6).

9. Appareil de mesure de température selon les revendications 3, 6 et 8, caractérisé en ce que le disque à repères (1) comprend dans sa zone externe des butées d'arrêt (21) réparties régulièrement sur sa périphérie, qui sont disposées sur le côté du disque à repères (20) qui est à l'opposé du verre de recouvrement (12) et qui forment une partie du dispositif d'arrêt (22), et en ce qu'il est prévu une patte (24) constituant le contre-organe correspondant du dispositif d'arrêt (22) sur le boîtier (11) ou sur le verre de recouvrement (12), que l'on peut dégager à volonté au moyen d'une vis (23), cette patte comprenant un ergot d'arrêt (25) pénétrant entre deux butées d'arrêt (21) voisines (Fig. 1 et 4).

10. Appareil de mesure de température selon les revendications 3, 7 et 8, caractérisé en ce qu'un alésage fileté est prévu dans le boîtier (11), dans lequel est vissée une vis (43) accessible par le côté arrière du boîtier et formant le dispositif d'arrêt (22), et qui exerce une pression sur la région externe du côté du disque à repères (20) qui est à l'opposé du verre de recouvrement (12) (Fig. 6).

11. Appareil de mesure de température selon la revendication 3, caractérisé en ce que le détecteur de température (4) est constitué sous forme d'un détecteur de température à bilame métallique.

12. Appareil de mesure de température selon la revendication 3, caractérisé en ce que le détecteur de température (4) comprend un boîtier cylindrique et allongé rempli d'un fluide expansible et relié par l'intermédiaire d'un tube capillaire (5) avec le vase d'expansion (6) du mécanisme de mesure de température monté dans le dispositif d'affichage de température (2) (Fig. 2 et 3).

13. Appareil de mesure de température selon les revendications 3 et 12, caractérisé en ce que le boîtier du détecteur comprend dans la zone du raccord du tube capillaire un manchon fendu (33) pouvant coulisser axialement sur le raccord et comprenant un filetage externe (34) et un écrou (35) fixé sur ce filetage de façon à ne pouvoir s'en dégager, l'écrou comprenant sur son côté opposé au tube capillaire (5) deux saillies (36) disposées radialement vers l'extérieur et diamétralement l'une par rapport à l'autre, leur diamètre externe le plus important étant approximativement supérieur de 10 % au diamètre interne le plus important du trou de fixation (37) associé et pratiqué dans la conduite (3) de la cheminée.

14. Appareil de mesure de température selon la revendication 3, caractérisé en ce que le second repère (31b) a une forme différente du premier (Fig. 1 et 5).

15. Appareil de mesure de température selon la revendication 3, caractérisé en ce qu'il est prévu un contact de commutation disposé de manière que l'aiguille entraînée (14), lorsqu'elle atteint la position qui correspond au deuxième repère (31b), émette un signal électrique qui commande de préférence un affichage optique.

16. Appareil de mesure de température selon la revendication 3, caractérisé en ce que l'aiguille qui indique la valeur réelle (9) est presque totalement recouverte par un écran (30) et en ce que des repères d'étalonnage (44) sont de préférence prévus sur cet écran (Fig. 1).

17. Appareil de mesure de température selon la revendication 3, caractérisé en ce que l'aiguille entraînée (14) comprend une partie d'entraînement recourbée en direction de l'aiguille indiquant la valeur réelle (9), s'étendant au-dessus de cette dernière sous forme d'une saillie (10), et en ce qu'un bouton tournant (13) est monté axialement sur le côté du verre de recouvrement (12) qui est à l'opposé de l'aiguille indiquant la valeur réelle (9), ce bouton étant relié à l'aiguille entraînée (14) par l'intermédiaire d'un accouplement à friction (15) (Fig. 2 et 6).

Fig. 2

Fig. 1

Fig. 3

Fig. 4

## Fig. 6

22  43
2
42
27
14
12
20
13a
6
13
20a
15
10
9
7

## Fig. 5

2
A
31b
17
14
31a
41
20
11
12
32
B